# EUROPEAN PATENT SPECIFICATION

(11) **EP 4 227 471 B1**
(45) Date of publication and mention of the grant of the patent: **11.11.2026**
(21) Application number: 23155108.6
(22) Date of filing: 06.02.2023
(51) Int. Cl.: E04C 1/41, B09B 3/32, B09B 3/40, E04C 2/288, B09B 101/75, E04B 2/02

(54) **FILLER BODY TO BE USED IN A CONSTRUCTION ELEMENT AND CONSTRUCTION ELEMENT**
FÜLLKÖRPER ZUR VERWENDUNG IN EINEM BAUELEMENT UND BAUELEMENT
CORPS DE REMPLISSAGE DESTINÉ À ÊTRE UTILISÉ DANS UN ÉLÉMENT DE CONSTRUCTION ET ÉLÉMENT DE CONSTRUCTION

(30) Priority: 15.02.2022 SE 2250151
(43) Date of publication of application: 16.08.2023
(73) Proprietor: Bo Altenstam AB, 242 33 Hörby (SE)
(72) Inventor: ALTENSTAM, Bo, 242 33 Hörby (SE)
(74) Representative: AWA Sweden AB

(56) References cited:
- EP-A1- 0 397 280
- WO-A1-97/19797
- CN-A- 106 608 006
- FR-A5- 2 166 574
- US-A- 4 188 760

## Description

### Technical field

The invention relates to a filler body to be used in a construction element, and a construction element comprising reinforced concrete comprising such filler body.

### Background art

A common construction element for constructing easily assembled and disassembled walls is made in the form of a concrete block. The concrete blocks can be stacked on top of each other in order to make walls. The walls can both be easily assembled and then easily disassembled. The construction elements can then be reused elsewhere. This type of construction element is therefore highly usable for constructing temporary wall systems.

In order for the concrete blocks to be able to construct stable wall systems the blocks are made from concrete. Thus, the blocks are durable, stable, and able to support the weight of other concrete blocks positioned on top of them. As such the elements will weigh a considerable amount and do not provide much in the way of thermal insulation. The weight makes construction of wall systems more cumbersome, and the lack of insulation makes the elements unsuitable for constructing certain types of walls.

In order to decrease the weight of the construction elements and provide an increased insulation, construction elements may be provided with plastic components inside of the concrete blocks. Among existing prior art solutions, WO 97/19797, which relates to a composite structural member where a non-biodegradable compressible material is encased in a cementitious material, and CN 106 608 006, which relates to recycling of polyolefin foaming material, may be mentioned. However, such construction elements will not be as durable. This as concrete and a plastic component will not have a similar thermal expansion coefficient. Thus, over time, as the construction element heats up and cools off, cracks will appear in the construction element which weakens the construction.

Accordingly, there is a need for improved construction elements of the type containing a plastic component which have an improved durability.

### Summary of the invention

It is an object of the present invention to provide an improvement of the construction elements according to prior art.

A particular object is to provide a construction element with an improved durability.

Another object is to provide a construction element with improved insulative properties.

Another object is to provide a construction element which can provide long time storage of plastic.

Another object is to provide a construction element with reduced weight. These and other objects, and/or advantages that will be apparent from the following description of examples, are achieved, in full or at least in part, by a filler body to be used in a construction element. The filler body comprises a plurality of plastic blocks of compressed plastic. Each plastic block has a side wall facing a side wall of another plastic block of the plurality of plastic blocks. The filler body further comprises a flexible plastic member arranged in an interface between said facing side walls. The flexible plastic member has a thickness in the range of 0.5-3.0 cm.

This is advantageous in that a construction element enclosing such a filler body in concrete will be more durable. This since any expansion due to thermal expansion of the plastic blocks may be accommodated by the plastic material compressing the flexible plastic member without unduly affecting the surrounding concrete. The flexible plastic member may later expand when under less pressure from the plastic blocks. As such the flexible plastic member may be in constant contact with the facing side walls of the plastic blocks. Since the thermal expansion may be due to a fire the resistance of a construction element containing a filler body may be improved as well. The flexible plastic member may have a varying thickness in the interface between the facing side walls with remained advantage and function.

Each plastic block may have at least two side walls each facing a side wall of another plastic block of the plurality of plastic blocks. The filler body may further comprise a flexible plastic member arranged in each interface between said facing side walls.

This is advantageous in that the thermal expansion of the plastic blocks may be compensated for by a flexible plastic member in two dimensions.

Each plastic block may have at least three side walls, each side wall facing a side wall of another plastic block of the plurality of plastic blocks. The filler body may further comprise a flexible plastic member arranged in each interface between said facing side walls.

This is advantageous in that the thermal expansion of the plastic blocks may be compensated for by a flexible plastic member in three dimensions.

The filler body may comprise a first layer of four plastic blocks of compressed plastic arranged in a pattern of two by two and a second layer of four plastic blocks of compressed plastic arranged in a pattern of two by two. The second layer of blocks may be arranged on top of the first layer of blocks. Each block of the first layer and of the second layer may have at least three side walls, each side wall facing a side wall of another plastic block of the first layer or of the second layer. The filler body may further comprise a flexible plastic member arranged in each interface between said facing side walls.

This is advantageous in that the thermal expansion of the plastic blocks may be compensated for by flexible plastic members in three dimensions. Further an arrangement of two layers with two-by-two blocks may provide the minimum number of blocks needed for each block to have three side walls, each side wall facing a side wall of another plastic block.

The flexible plastic member may extend substantially across the full interface between said facing side walls.

This is advantageous in that concrete may be prevented from entering the interface between the facing walls. Thus, pressure from the thermal expansion of the plastic blocks will affect the concrete less and the flexible plastic member(s) more.

Preferably, the flexible plastic member may extend essentially across the full interface between said facing side walls. However, it is appreciated that the interface between said facing side walls may alternatively contain different types of flexible plastic members having similar properties with regard to thermal expansion, weight density, or the like, without departing from the scope of the appended claims.

The flexible member may be in the form of a sheet which can facilitate assembly of the filling body.

The filler body may be contained in a plastic wrapper.

This is advantageous in that the plastic wrapper may prevent concrete from entering the filler body. Further, the plastic wrapper may prevent leakage out from the filler body, such as leakage of different substances over time from the compressed plastic. Leakage into the filler body may also be prevented. Further, this may allow for an easier deconstruction of a construction element containing such a filler body. This since the plastic wrapper may protect the filler body from being affected by any deconstruction of the part of the construction element which encloses the filler body.

The block of compressed plastic may comprise recycled plastic material.

This is advantageous in that the filler body may provide a use and suitable storage of recycled plastic material, and especially a mixture of different types of plastic material. The compressed plastic may comprise polyethylene, polypropylene, polyamide, polyvinyl chloride, cross-linked polyethylene, low smoke zero halogen plastic such as low smoke zero halogen polyethylene, polyurethane and/or fluoropolymers. Further, the compressed plastic block may comprise different sorts of rubber, chalk and/or talc.

The flexible plastic member may comprise expanded polystyrene.

This is advantageous in that expanded polystyrene is a lightweight, flexible, and cheap material.

According to a second aspect, the objects are achieved in full, or at least in part, by a construction element comprising reinforced concrete, where the reinforced concrete encloses at least one filler body according to the first aspect.

This is advantageous in that such a construction element may be more durable. This since any expansion due to thermal expansion of the plastic blocks in the filler body may be accommodated for by compression of the flexible plastic member and hence without negatively affect the concrete that encloses the filler body.

The reinforced concrete may enclose at least two filler bodies. Said filler bodies may be separated by an intermediate concrete wall.

This is advantageous in that a construction element may be made larger without losing any durability. This since the intermediate concrete wall may compensate for any structural strength that is lost by the concrete element containing a larger number of filler bodies. Further, such an intermediate concrete wall may provide an attachment point for a lifting bolt by which the construction element may be lifted.

At least one exterior side wall of the construction element may comprise at least one distance element. The at least one distance element may extend from the filler body, through the reinforced concrete and to an exterior surface of the construction element.

The at least one distance element may be configured to allow connection of an external fixation member.

This is advantageous in that external devices may be attached to the construction element in an easy way. Examples of external devices are surface panels and insulation panels. By having integrated distance elements, such external devices may be connected to the concrete element without the need of forming new holes by, e.g., drilling in the concrete element.

The plastic block may be formed by the steps of: heating the mixture to a temperature above 45 °C and below 80 °C, preferably a temperature above 45 °C and below 75 °C, more preferably a temperature above 50 °C and below 65 °C, until a humidity level of less than 5% is reached, preferably less than 3%, more preferably less than 1%; and compressing the dried and heated shredded plastic material to form a self-contained plastic block of compressed plastic.

This is advantageous in that a mixture of shredded plastic material together may form a self-contained block without heating the mixture to 80 °C. This reduces the risk of releasing any toxic or otherwise undesirable gaseous compounds from the plastic. The skilled person realizes that the temperature required depends on a number of parameters that are hard to foresee. Examples of influencing parameters are the type of shredded plastic, content of any binders and content of other substances such as talc. By way of example, recycled shredded plastic from cables has other properties than recycled shredded plastic from the packaging industry.

Compressing the dried and heated shredded plastic material may be done under a pressure of 30 to 50 kg/cm² until the density of the self-contained plastic block of compressed plastic is 2 to 3 times the density of the mixture of shredded plastic material. This is advantageous in that a durable self-contained block can be achieved. Such a block may provide load bearing properties in a construction element containing it. As given above, the required pressure depends on the type of shredded plastic material that is used as raw material.

### Brief description of the drawings

The above objects, as well as additional objects, features, and advantages of the present invention, will be more fully appreciated by reference to the following illustrative and non-limiting detailed description of preferred examples of the present invention, when taken in conjunction with the accompanying drawings, wherein:
Figure 1 illustrates a perspective view of a filler body.
Figure 2 illustrates a perspective view of a filler body.
Figure 3 illustrates a perspective view of a filler body.
Figure 4 illustrates a perspective view of a filler body.
Figure 5 illustrates a perspective view of the filler body in Figure 1 with a plastic wrapper.
Figure 6 illustrates a cross sectional top view of a construction element containing a filler body.
Figure 7A illustrates a cross sectional top view of a construction element containing two filler bodies.
Figure 7B illustrates a cross sectional side view of the construction element in Figure 7A.
Figure 8A illustrates a perspective top view of a construction element.
Figure 8B illustrates a perspective bottom view of the construction element in Figure 8A.
Figures 9A, 9B, 9C and 9D illustrate cross sectional top views of a construction element containing filler bodies.
Figures 10A, 10B, 10C and 10D illustrate cross sectional side views of a construction element containing filler bodies.

### Detailed description

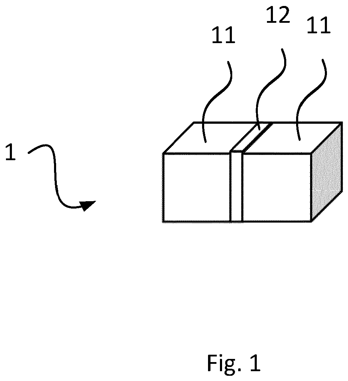

Figure 1 shows a perspective view of a filler body 1 to be used in a construction element. The filler body 1 comprises two blocks 11 of compressed plastic. Each of the two plastic blocks 11 has a side wall which is facing a side wall of the other block 11. The filler body 1 further comprises a flexible plastic member 12 which is arranged in an interface between the facing side walls of the two blocks 11. The term *plastic block* may, without confusing the skilled person, interchangeably be referred to as *block* throughout, where applicable.

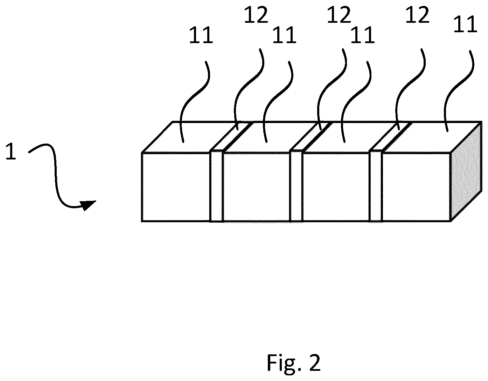

Figure 2 shows a perspective view of a filler body 1 to be used in a construction element. The filler body 1 comprises four blocks 11 of compressed plastic. The blocks 11 are positioned in a one by four pattern, or in other words in a row. Each of the four plastic blocks 11 has a side wall which is facing a side wall of another block 11. The outermost blocks 11 have one side wall which is facing a side wall of another block 11. The blocks 11 between the outermost blocks 10 each has two side walls which are facing a side wall of another block 11. The filler body 1 further comprises flexible plastic members 12 which are arranged in each interface between the facing side walls of the blocks 11.

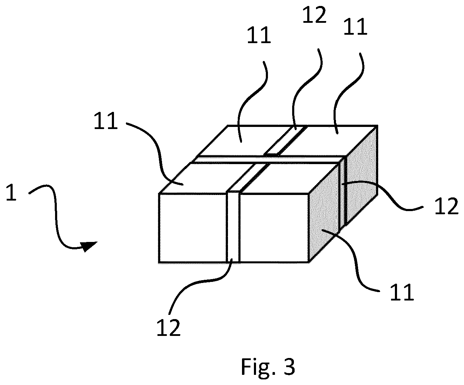

Figure 3 shows a perspective view of a filler body 1 to be used in a construction element. The filler body 1 comprises four blocks 11 of compressed plastic. The blocks 11 are positioned in a two-by-two pattern. The blocks 10 each has two side walls which are facing a side wall of another block 11. The filler body 1 further comprises flexible plastic members 12 which are arranged in each interface between the facing side walls of the blocks 11.

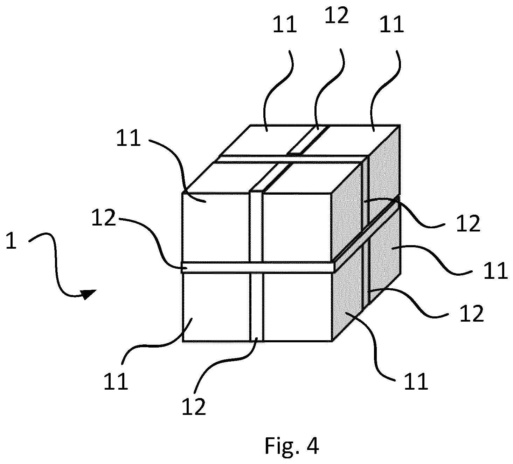

Figure 4 shows a perspective view of a filler body 1 to be used in a construction element. The filler body 1 comprises a first layer of four blocks 11 of compressed plastic arranged in a pattern of two by two and a second layer of four blocks 11 of compressed plastic arranged in a pattern of two by two (2x2). The second layer is arranged on top of the first layer. Another way of describing it is to say that the filler body 1 comprises eight blocks 11 of compressed plastic and that the blocks 11 are positioned in a two by two by two (2x2x2) pattern. The blocks 11 each has three side walls which are facing a side wall of another block 11. The filler body 1 further comprises flexible plastic members 12 which are arranged in each interface between the facing side walls of the blocks 11.

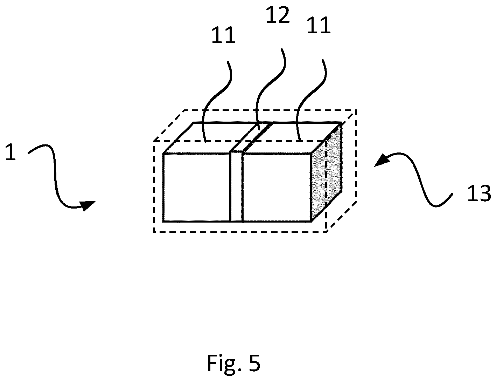

Figure 5 shows a perspective view of the filler body 1 in Figure 1. Here the filler body 1 is contained in a plastic wrapper 13. Although the plastic wrapper 13 is shown in the context of the filler body 1 as shown in Figure 5 and 1, any other filler body 1 of the exemplified types may be contained in a plastic wrapper, such as the filler bodies 1 shown in figures 2, 3, 4, 6, 7A and 7B. The plastic wrapper 13 encloses the filler body 1 in a sealing manner, such that gases and liquids that may be released over time are prevented from passing through the plastic wrapper 13. Although not shown in any of the figures, the filler body 1 may be contained by a layer of paint in a sealing manner such that gases and liquids that may be formed over time are prevented from passing through the layer of paint. This layer of paint may be applied in addition to or instead of the plastic wrapper 13.

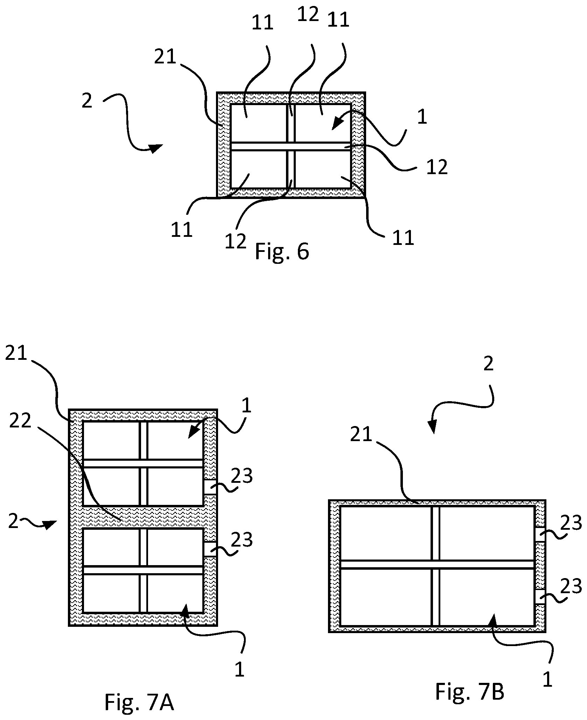

Figure 6 shows a cross sectional top view of a construction element 2 containing a filler body 1. The filler body 1 is of the type as described in relation to Figure 4, however the filler body 1 may be may as described in relation to any of the other figures. The construction element 2 comprises reinforced concrete 21 which encloses the filler body 1.

Figure 7A shows a cross sectional top view of a construction element containing two filler bodies 1. Each filler body 1 is of the type as described in relation to Figure 4, however each filler body 1 may be may as described in relation to any of the other figures. The construction element 2 comprises reinforced concrete 21 which encloses the filler bodies 1. The construction element comprises an intermediate concrete wall 22. The intermediate concrete wall 22 is situated between the two filler bodies 1. The filler bodies 1 are separated by the intermediate concrete wall 22. The intermediate concrete wall 22 completely separates the two filler bodies 1 from each other. The intermediate concrete wall 22 extends between two opposing exterior side walls of the enclosing concrete 21 and between the top and bottom exterior side walls of the enclosing concrete 21. As can be seen in Figure 7A, one of the exterior side walls of the construction element 2 comprises a distance element 23. In figure 7A the construction element comprises four distance elements 23 but only two are visible in the cross-sectional top view. The distance elements 23 extend from a filler body 1 through the reinforced concrete 21 and to an exterior surface of the construction element 1.

Figure 7B shows a cross sectional side view of the construction element in Figure 7A. In figure 7B two distance elements 23 are visible, a lower and an upper distance element 23.

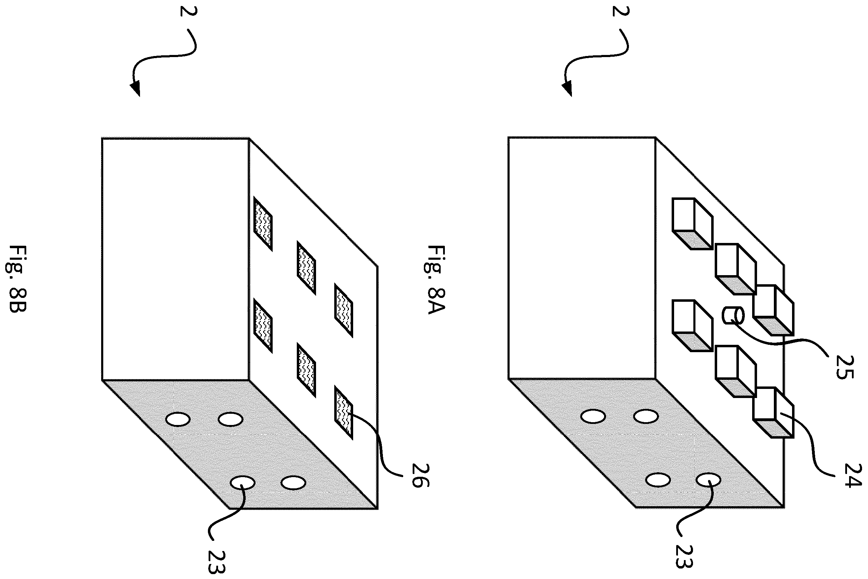

Figure 8A shows a perspective top view of a construction element 2. The construction element 2 comprises a plurality of optional protrusions 24 on its top side. The protrusions 24 are integrally formed in the reinforced concrete 21. The construction element 2 comprises an optional lifting bolt 25. The lifting bolt 25 is attached to an intermediate concrete wall as described in relation to Figure 7A. The construction element 2 can be lifted by the lifting bolt 25. The construction element 2 comprises distance elements 23 on one of the exterior side walls.

Figure 8B shows a perspective bottom view of the construction element in Figure 8A. The construction element 2 comprises a plurality of indentations 26 on its bottom side, opposite to its top side. The indentations 26 are formed in the reinforced concrete 21. The indentations 26 are not deep enough to reach any filler body 1 enclosed by the reinforced concrete 21.

The protrusions 24 and the indentations 26 are each formed such that they will fit into each other. The protrusions 24 of a first construction element 2 may fit into the indentations 26 of a second construction element 2 such that the elements lock onto each other. Thereby, a plurality of construction elements may be stacked, one on top of the other while lockingly engaging each other.

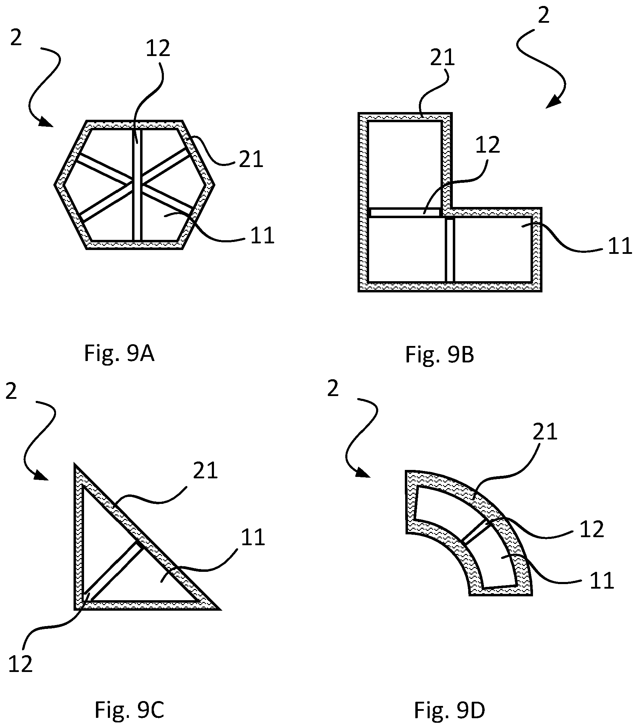

Figures 9A, 9B, 9C and 9D each show a cross sectional top view of a construction element of different forms, each containing a filler body.

The construction element 2 of Figure 9A has a hexagonal horizontal cross section. The hexagonal cross section in Figure 9A is a regular hexagon, that is it is both equiangular and equilateral.

The construction element 2 of Figure 9b has an L-shaped horizontal cross section. The angles of the L-shape are rectangular.

The construction element 2 of Figure 9C has a triangular horizontal cross section. The triangular cross section in Figure 9C is a right triangle, it may also be other types of triangles such as an equilateral triangle.

The construction element 2 of Figure 9D has a curved horizontal cross section. The shape can be seen to be a portion of an annulus, in Figure 9D it is a quarter of an annulus but may be other portions such as half an annulus.

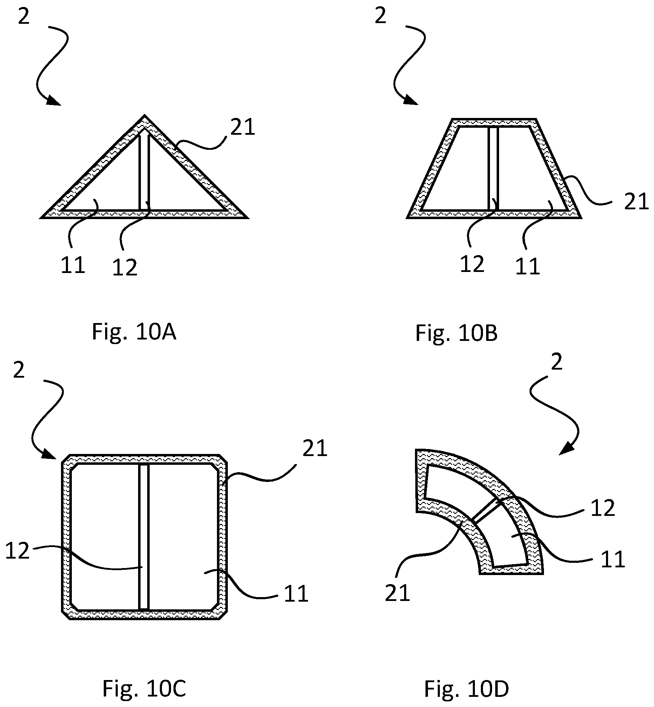

Figures 10A, 10B, 10C and 10D each show a cross sectional side view of a construction element of different forms, each containing a filler body.

The construction element 2 of Figure 10A has a triangular vertical cross section. The triangular cross section in Figure 10A is a right triangle, it may also be other types of triangles such as an equilateral triangle.

The construction element 1 of Figure 10B has a vertical cross section with the form of a truncated cone.

The construction element 1 of Figure 10C has a vertical cross section with the form of a truncated square or cuboid.

The construction element 1 of Figure 10D has a curved vertical cross section. The shape can be seen to be a portion of an annulus, in Figure 10D it is a quarter of an annulus but may be other portions such as half an annulus.

As can be seen in figures 9A-D and 10A-D the filler bodies, and thus also the blocks of compressed plastic, may take on many different shapes. For example, the same shapes as the construction elements 1 shown in figures 9A-D and 10A-D. Such as having a hexagonal horizontal or vertical cross section, an L-shaped horizontal or vertical cross section, a triangular horizontal or vertical cross section, a curved horizontal or vertical cross section, a horizontal or vertical cross section in the form of a truncated cone or truncated square or cuboid.

Although not shown visible in figures 9A-D or 10A-D, the construction elements may, as previously described, comprise more than one filler body. The filler bodies may then be separated by an intermediate concrete wall. The filler bodies may then take the shape of half of the shape of the construction element.

As is seen in the figures, each flexible plastic members 12 can be in the form of a sheet. Further, as can be seen in the figures, the flexible plastic members 12 can cover the interface between only two facing side walls, or they may cover the interfaces between several pairs of facing side walls. Further, the flexible plastic member 12 can extend substantially across the full interface between two facing side walls or across several pairs of facing side walls. The flexible member 12 can be a single flexible member 12 covering the interfaces between every pair of facing side walls of a filling block 1.

The flexible member 12 has a thickness in the range of 0.5-3 cm. The thickness may preferably be between 0.5 and 1.5 cm, and more preferably between 0.8 and 1.2 cm.

The reinforced concrete 21 encloses the filler body 1 in a sealing manner, such that gases and liquids that may be released from the plastic body over time are prevented from passing through the reinforced concrete 21. The concrete 21 is reinforced by fibers, such as plastic or composite fibers. In addition to increasing the tensile strength of the concrete 21, the fibers also provide a reduced water permeability of the concrete 21. Having concrete which is reinforced by fibers makes it easier to recycle, for example as compared to reinforcement with metal bars. The fibers may in a non-limiting example comprise polypropylene and may be added to the concrete at a ratio of between 0.1 kg to 10 kg per cubic meter of concrete, or at a ratio of between 0.5 kg to 5 kg per cubic meter of concrete. The fibers may have a tensile strength performance of between 100 MPa and 1000 MPa, more particular of between 300 MPa and 600 MPa.

The thickness of exterior side walls of the reinforced concrete 21 enclosing a filler body 1 may be between 1 and 8 cm. It may be of other thicknesses such as between 0.5 cm and 10 cm, or 2 cm and 6 cm, or 3 cm and 5 cm, or 3.5 cm and 4.5 cm.

The thickness of the intermediate wall 22 may be between 2 and 16 cm. It may be of other thicknesses such as between 1 cm and 20 cm, or 4 cm and 12 cm, or 6 cm and 10 cm, or 7 cm and 9 cm.

Preferably, and as is seen in the figures, the reinforced concrete 21 encloses the filler body in such a way that no space is left between the filler body and the reinforced concrete 21. This may be achieved by casting the reinforced concrete 21 around the filler body 1 when forming the construction element 2.

The blocks of compressed plastic can be formed from compressed plastic in the form of compressed shredded plastic or of compressed plastic granules.

The blocks of compressed plastic can comprise recycled plastic material. For example, plastic material which has been recycled from as cables, packaging, containers, bottles, products with plastic housings and such. The plastic may comprise components which are undesirable, such as toxic or environmentally hazardous components.

The plastic in the compressed plastic component forms a self-contained block by attachment of individual shredded plastic pieces to each other. The pieces of shredded plastic materiel do not melt together but rather attach to other plastic pieces. This is facilitated by heat and by binding agents which may be present in the plastic pieces.

The blocks of compressed plastic 11 may comprise polyethylene, polypropylene, polyamide, polyvinyl chloride, cross-linked polyethylene, low smoke zero halogen plastic such as low smoke zero halogen polyethylene, polyurethane and/or fluoropolymers. Further, the blocks may comprise different sorts of rubber, chalk and/or talc.

The blocks of compressed plastic 11 may consist of between 40 and 70 % polyvinyl chloride and 30 to 50 % polyethylene. More particularly, the blocks may consist of between 50 to 60 % polyvinyl chloride and 35 to 45 % polyethylene. The polyethylene may be cross-linked polyethylene or low smoke zero halogen polyethylene. The polyethylene may comprise a flame-retardant rubber. The rubber may be comprised at a rate of between 1 and 2 %. The percentages are given as weight percentages.

The flexible plastic component comprises expanded polystyrene. The expanded polystyrene comprises between 95% and 99 % air and between 5% and 1 % polystyrene, preferably the expanded polystyrene comprises 98% air and 2% polystyrene. The percentages are given as weight percentages.

The plastic wrapper 13 may comprise polyethylene, polystyrene, polypropylene, polyamide, polyethylene terephthalate, amorphous polyethylene terephthalate, polyvinyl chloride, ethylene vinyl alcohol and/or ethylene-vinyl acetate. Further, the blocks may comprise aluminum, paper, chalk and/or talc.

In addition to what is shown in the figures, more than one exterior side wall of the concrete element may comprise distance elements 23. Other numbers of distance elements 23 than four are possible as well.

The distance element 23 is configured to allow connection of an external fixation member. An external fixation member could for example be a screw or a nail which may be fixated in the distance element 23.

By an external fixation member an insulative sheet can be fastened to the construction element 2.

The distance element 23 should preferably be made of a corrosion resistant material. The distance element 23 should preferably be a material which is impermeable to gases and liquids. This such that the distance element 23 together with the reinforced concrete encloses the filler body 1 in a sealing manner, such that gases and liquids that may be released over time are prevented from passing through the reinforced concrete 21.

The distance element 23 could comprise an internal fixation member, for example an internally threaded cylinder in the distance element 23.

The distance element could consist of a type of plastic, metal or wood. Such a plastic could be a high-density plastic such as high-density polyethylene.

The blocks of compressed plastic 11 have the general shape of cuboids. The blocks 11 are not in the form of perfect cuboids and may present several differences to such a shape. For example, the corners may be rounded and the angle between two adjacent sides may be other than 90°. But in general, the blocks 11 have six sides which are substantially flat, and which are opposite to another side.

Being of a cuboid shape has several advantages, such as being simpler to load and transport since several blocks 11 can be packed tightly together without much empty space. A cuboid shape is also advantageous when being formed in that it simplifies the compression of plastic material into a self-contained block. Further, such a shape is advantageous when forming a filler body 1 as described herein, since each block can easily have a side wall which faces a side wall of another block. Further, heat expansion can more easily be compensated for in several dimensions as it is easier to place a flexible material 12 by the sides of a cuboid block 11.

The blocks of compressed plastic 11 may preferably have the general shape of cubes. Such cubes may be less than perfect cubes and may present several differences to such a shape. For example, the edges of sides may be of slightly different length, the corners may be rounded and the angle between two adjacent sides may be other than 90°. But in general, the side edges of the blocks 11 are of equal length, have six sides which are substantially flat, and which are opposite to another side.

Any advantages of a cuboid shape hold true for a cubic shape as well, only that a cube shape in general is more advantageous.

A skilled person understands that other shapes are possible as well.

The filler bodies 1 have the general shape of cuboids. The filler bodies 1 are not perfect not in the form of perfect cuboids and may present several differences to such a shape. For example, the corners may be rounded and the angle between two adjacent sides may be other than 90°. But in general, the filler bodies 1 have six sides which are substantially flat, and which are opposite to another side.

Being of a cuboid shape has several advantages, such as being simpler to load and transport in that several filler bodies 1 can be packed tightly together without much empty space. Further, heat expansion can more easily be compensated for in several dimensions of a cuboid filler body 1.

The filler bodies 1 may preferably have the general shape of cubes. Such cubes may be less than perfect cubes and may present several differences to such a shape. For example, the edges of sides may be of slightly different length, the corners may be rounded and the angle between two adjacent sides may be other than 90°. But in general, the side edges of the filler bodies 1 are of equal length, have six sides which are substantially flat, and which are opposite to another side.

Any advantages of a cuboid shape hold true for a cubic shape as well, only that a cube shape in general is more advantageous.

A skilled person understands that other shapes are possible as well.

It is advantageous if the filler body 1 and the blocks 11 of compressed plastic inside of the filler body 1 are of generally the same shape.

The construction element 2 has the general shape of a cuboid. The construction element 2 is not in the form of a perfect cuboid and may present several differences to such a shape. For example, the corners may be rounded and the angle between two adjacent sides may be other than 90°. But in general, the construction element 2 has six sides which are substantially flat, and which are opposite to another side.

Being of a cuboid shape has several advantages, such as being simpler to load and transport in that several filler bodies 1 can be packed tightly together without much empty space. Further, heat expansion can more easily be compensated for in several dimensions of a cuboid filler body 1.

A skilled person understands that other shapes are possible as well.

It is advantageous if the construction element and a filler body 1 inside of the construction element 2 are of generally the same shape. Such as both being of a type of cuboid form.

The construction element preferably fulfills particular fire requirements, this being "Boverkets byggregler REI 30" or "Boverkets byggregler REI 60". These requirements are that, for "Boverkets byggregler REI 30", after 30 minutes, a fire burning at one side of the construction element 2 should not have affected the construction element 2 in such a way that the construction elements 2 ability to carry loads are affected by more than 10%, in that the temperature on an opposing exterior side of the construction element 2 with regards to the fire does not exceed 180 °C and in that the fire does not burn through the construction element 2. Preferably the construction element fulfills these same requirements after 60 minutes, which is "Boverkets byggregler REI 60".

In a particular example a filler body 1 is arranged as in Figure 4. That is, the filler body 1 comprises a first layer of four blocks 11 of compressed plastic arranged in a pattern of two by two and a second layer of four blocks 11 of compressed plastic arranged in a pattern of two by two. The second layer is arranged on top of the first layer. Each block 11 has three side walls which are facing a side wall of another block 11. The filler body 1 further comprises flexible plastic members 12 which are arranged in each interface between the facing side walls of the blocks 11. In this particular example the flexible plastic members have a thickness of 1 cm. The blocks 11 have a length of 35 cm, a height of 35 cm and a width of 35 cm. The filler body 1 is contained in a plastic wrapper 13.

In a particular example a construction element 2 encloses two filler bodies 1 separated by an intermediate concrete wall 22. Each filler body 1 is of the type as described in the specific example above. The construction element 2 has a length of 1.6 meters, a height of 0.8 meters and a width of 0.8 meters. The exterior walls of the concrete 21 enclosing the filler bodies 1 have a thickness of 4 cm. The intermediate concrete wall has a thickness of 8 cm.

Such a construction element 2 will fulfill the fire requirements as described above.

A block 11 of compressed plastic of a filler body 1 to be used in a construction element 2 can be formed as described hereafter.

A mixture of shredded plastic material may be provided. The plastic material can alternatively be in the form of granules.

The mixture of shredded plastic is heated to a temperature above 45 °C and below 80 °C, preferably a temperature above 45 °C and below 75 °C, more preferably a temperature above 50 °C and below 65 °C. This is done until a humidity level of less than 5% is reached, preferably less than 3%, more preferably less than 1%. The heating may be made during tumbling.

Afterwards the dried and heated shredded plastic material may be arranged into a mold. The dried and heated shredded plastic material is then compressed to form a self-contained block 11 of compressed plastic. The dried and heated shredded plastic material is compressed under a pressure of 30 to 50 kg/cm², preferably between 45 and 55 kg/cm², more preferably between 39 and 41 kg/cm². This may be done until the density of the self-contained block of compressed plastic is 2 to 3 times the density of the mixture of shredded plastic material. This being compared to the heated and dried mixture which is arranged in the mold.

During the compression of the dried and heated plastic material should be of a temperature above 45 °C and below 80 °C, preferably a temperature above 45 °C and below 75 °C, more preferably a temperature above 50 °C and below 65 °C.

The skilled person understands that the end temperature and time of heating, the pressure during and time of compression are dependent on composition of the mixture of plastic. Such as its original water content, the types of plastics which are present in the mixture and any other compounds present in the mixture.

## Claims

1. A filler body (1) to be used in a construction element (2), the filler body (1) comprising:
a plurality of plastic blocks (11) of compressed plastic;
each plastic block (11) having a side wall facing a side wall of another plastic block (11) of the plurality of plastic blocks (11), and
wherein the filler body (1) further comprises a flexible plastic member (12) arranged in an interface between said facing side walls,
said flexible plastic member (12) having a thickness in the range of 0.5-3.0 cm.

2. A filler body (1) according to claim 1, wherein each plastic block (11) has at least two side walls each facing a side wall of another plastic block (11) of the plurality of plastic blocks (11);
wherein the filler body (1) further comprises a flexible plastic member (12) arranged in each interface between said facing side walls.

3. A filler body (1) according to claim 1 or 2, wherein each plastic block (11) has at least three side walls, each side wall facing a side wall of another plastic block (11) of the plurality of plastic blocks (11);
wherein the filler body (1) further comprises a flexible plastic member (12) arranged in each interface between said facing side walls.

4. A filler body (1) according to claim 1, wherein the filler body (1) comprises a first layer of four plastic blocks (11) of compressed plastic arranged in a pattern of two by two, and
a second layer of four plastic blocks (11) of compressed plastic arranged in a pattern of two by two,
wherein the second layer is arranged on top of the first layer,
wherein each block (11) of the first layer and of the second layer has at least three side walls, each side wall facing a side wall of another plastic block (11) of the first layer or of the second layer, and
wherein the filler body (1) further comprises a flexible plastic member (12) arranged in each interface between said facing side walls.

5. A filler body (1) according to any of the preceding claims, wherein the flexible plastic member (12) extends substantially across the full interface between said facing side walls.

6. A filler body (1) according to any of the preceding claims, wherein the filler body (1) is contained in a plastic wrapper (13).

7. A filler body (1) according to any of the preceding claims, wherein the plastic block (11) of compressed plastic comprises recycled plastic material and/or wherein the flexible plastic member (12) comprises expanded polystyrene.

8. A construction element (2) comprising reinforced concrete (21),
wherein the reinforced concrete (21) encloses at least one filler body (1) according to any of the preceding claims.

9. A construction element (2) according to claim 8, wherein the reinforced concrete (21) encloses at least two filler bodies (1),
said filler bodies (1) being separated by an intermediate concrete wall.

10. A construction element (2) according to claims 8 or 9, wherein at least one exterior side wall of the construction element (2) comprises at least one distance element (23),
wherein the at least one distance element (23) extends from the filler body (1) through the reinforced concrete (21) and to an exterior surface of the construction element (2).

11. A construction element (2) according to claim 10, wherein the at least one distance element (23) is configured to allow connection of an external fixation member.

## Patentansprüche

1. Füllkörper (1) zur Verwendung in einem Bauelement (2), wobei der Füllkörper (1) Folgendes umfasst:
mehrere Kunststoffblöcke (11) aus komprimiertem Kunststoff;
wobei jeder Kunststoffblock (11) eine Seitenwand aufweist, die einer Seitenwand eines anderen Kunststoffblocks (11) der mehreren Kunststoffblöcke (11) zugewandt ist, und
wobei der Füllkörper (1) ferner ein flexibles Kunststoffelement (12) umfasst, das in einer Grenzfläche zwischen den einander zugewandten Seitenwänden angeordnet ist,
wobei das flexible Kunststoffelement (12) eine Dicke im Bereich von 0,5-3,0 cm aufweist.

2. Füllkörper (1) nach Anspruch 1, wobei jeder Kunststoffblock (11) mindestens zwei Seitenwände aufweist, die jeweils einer Seitenwand eines anderen Kunststoffblocks (11) der mehreren Kunststoffblöcke (11) zugewandt sind;
wobei der Füllkörper (1) ferner ein flexibles Kunststoffelement (12) umfasst, das in jeder Grenzfläche zwischen den einander zugewandten Seitenwänden angeordnet ist.

3. Füllkörper (1) nach Anspruch 1 oder 2, wobei jeder Kunststoffblock (11) mindestens drei Seitenwände aufweist, wobei jede Seitenwand einer Seitenwand eines anderen Kunststoffblocks (11) der mehreren Kunststoffblöcke (11) zugewandt ist;
wobei der Füllkörper (1) ferner ein flexibles Kunststoffelement (12) umfasst, das in jeder Grenzfläche zwischen den einander zugewandten Seitenwänden angeordnet ist.

4. Füllkörper (1) nach Anspruch 1, wobei der Füllkörper (1) eine erste Schicht aus vier Kunststoffblöcken (11) aus komprimiertem Kunststoff, die in einem paarweisen Muster angeordnet sind, und
eine zweite Schicht aus vier Kunststoffblöcken (11) aus komprimiertem Kunststoff, die in einem paarweisen Muster angeordnet sind, umfasst,
wobei die zweite Schicht auf der ersten Schicht angeordnet ist,
wobei jeder Block (11) der ersten Schicht und der zweiten Schicht mindestens drei Seitenwände aufweist, wobei jede Seitenwand einer Seitenwand eines anderen Kunststoffblocks (11) der ersten Schicht oder der zweiten Schicht zugewandt ist, und
wobei der Füllkörper (1) ferner ein flexibles Kunststoffelement (12) umfasst, das in jeder Grenzfläche zwischen den einander zugewandten Seitenwänden angeordnet ist.

5. Füllkörper (1) nach einem der vorhergehenden Ansprüche, wobei sich das flexible Kunststoffelement (12) im Wesentlichen über die gesamte Grenzfläche zwischen den einander zugewandten Seitenwänden erstreckt.

6. Füllkörper (1) nach einem der vorhergehenden Ansprüche, wobei der Füllkörper (1) in einer Kunststoffumhüllung (13) eingeschlossen ist.

7. Füllkörper (1) nach einem der vorhergehenden Ansprüche, wobei der Kunststoffblock (11) aus komprimiertem Kunststoff recyceltes Kunststoffmaterial umfasst und/oder wobei das flexible Kunststoffelement (12) geschäumtes Polystyrol umfasst.

8. Bauelement (2), das Stahlbeton (21) umfasst,
wobei der Stahlbeton (21) mindestens einen Füllkörper (1) nach einem der vorhergehenden Ansprüche umschließt.

9. Bauelement (2) nach Anspruch 8, wobei der Stahlbeton (21) mindestens zwei Füllkörper (1) umschließt,
wobei die Füllkörper (1) durch eine Betonzwischenwand getrennt sind.

10. Bauelement (2) nach Anspruch 8 oder 9, wobei mindestens eine Außenseitenwand des Bauelements (2) mindestens ein Abstandselement (23) umfasst,
wobei sich das mindestens eine Abstandselement (23) von dem Füllkörper (1) durch den Stahlbeton (21) und zu einer Außenfläche des Bauelements (2) erstreckt.

11. Bauelement (2) nach Anspruch 10, wobei das mindestens eine Abstandselement (23) dazu ausgelegt ist, eine Verbindung eines externen Befestigungselements zu ermöglichen.

## Revendications

1. Corps de remplissage (1) à utiliser dans un élément de construction (2), le corps de remplissage (1) comprenant :
une pluralité de blocs en matière plastique (11) en matière plastique comprimée ;
chaque bloc en matière plastique (11) comportant une paroi latérale faisant face à une paroi latérale d'un autre bloc en matière plastique (11) de la pluralité de blocs en matière plastique (11), et
le corps de remplissage (1) comprenant en outre un élément en matière plastique souple (12) agencé dans une interface entre lesdites parois latérales se faisant face,
ledit élément en matière plastique souple (12) ayant une épaisseur comprise entre 0,5 et 3,0 cm.

2. Corps de remplissage (1) selon la revendication 1, chaque bloc en matière plastique (11) comportant au moins deux parois latérales faisant chacune face à une paroi latérale d'un autre bloc en matière plastique (11) de la pluralité de blocs en matière plastique (11) ;
le corps de remplissage (1) comprenant en outre un élément en matière plastique souple (12) agencé dans chaque interface entre lesdites parois latérales se faisant face.

3. Corps de remplissage (1) selon la revendication 1 ou 2, chaque bloc en matière plastique (11) comportant au moins trois parois latérales, chaque paroi latérale faisant face à une paroi latérale d'un autre bloc en matière plastique (11) de la pluralité de blocs en matière plastique (11) ;
le corps de remplissage (1) comprenant en outre un élément en matière plastique souple (12) agencé dans chaque interface entre lesdites parois latérales se faisant face.

4. Corps de remplissage (1) selon la revendication 1, le corps de remplissage (1) comprenant une première couche de quatre blocs en matière plastique (11) en matière plastique comprimée agencés selon un motif de deux par deux, et
une deuxième couche de quatre blocs en matière plastiques (11) en matière plastique comprimée agencés selon un motif de deux par deux,
la deuxième couche étant agencée sur la première couche, chaque bloc (11) de la première couche et de la deuxième couche comportant au moins trois parois latérales, chaque paroi latérale faisant face à une paroi latérale d'un autre bloc en matière plastique (11) de la première couche ou de la deuxième couche et
le corps de remplissage (1) comprenant en outre un élément en matière plastique souple (12) agencé dans chaque interface entre lesdites parois latérales se faisant face.

5. Corps de remplissage (1) selon l'une quelconque des revendications précédentes, l'élément en matière plastique souple (12) s'étendant sensiblement à travers l'interface complète entre lesdites parois latérales se faisant face.

6. Corps de remplissage (1) selon l'une quelconque des revendications précédentes, le corps de remplissage (1) étant contenu dans une enveloppe en matière plastique (13).

7. Corps de remplissage (1) selon l'une quelconque des revendications précédentes, le bloc en matière plastique (11) en matière plastique comprimée comprenant une matière plastique recyclée et/ou l'élément en matière plastique souple (12) comprenant du polystyrène expansé.

8. Élément de construction (2) comprenant du béton armé (21),
le béton armé (21) entourant au moins un corps de remplissage (1) selon l'une quelconque des revendications précédentes.

9. Élément de construction (2) selon la revendication 8, le béton armé (21) entourant au moins deux corps de remplissage (1),
lesdits corps de remplissage (1) étant séparés par une paroi intermédiaire en béton.

10. Élément de construction (2) selon les revendications 8 ou 9, au moins une paroi latérale extérieure de l'élément de construction (2) comprenant au moins un élément d'écartement (23),
l'au moins un élément d'écartement (23) s'étendant à partir du corps de remplissage (1) à travers le béton armé (21) et jusqu'à une surface extérieure de l'élément de construction (2).

11. Élément de construction (2) selon la revendication 10, l'au moins un élément d'écartement (23) étant configuré pour permettre la connexion d'un élément de fixation externe.
